(19) Europäisches Patentamt
European Patent Office
Office européen des brevets

(11) **EP 3 981 911 B1**

(12) **EUROPEAN PATENT SPECIFICATION**

(45) Date of publication and mention
of the grant of the patent:
**05.08.2026 Bulletin 2026/32**

(21) Application number: **20818863.1**

(22) Date of filing: **05.06.2020**

(51) International Patent Classification (IPC):
*D07B 1/06* *(2006.01)*    *B60C 1/00* *(2006.01)*
*B60C 9/00* *(2006.01)*    *C08K 3/04* *(2006.01)*
*C08K 5/3477* *(2006.01)*    *C08K 5/40* *(2006.01)*
*C08K 5/44* *(2006.01)*    *C08L 21/00* *(2006.01)*
*C08K 9/02* *(2006.01)*    *C08K 7/06* *(2006.01)*

(52) Cooperative Patent Classification (CPC):
(C-Sets available)
**B60C 1/00; C08K 3/04; C08K 5/40; C08K 5/44;
C08K 7/06; C08K 9/02;** C08K 2201/006;
C08K 2201/019; D07B 2205/3089        (Cont.)

(86) International application number:
**PCT/JP2020/022230**

(87) International publication number:
**WO 2020/246569 (10.12.2020 Gazette 2020/50)**

(54) **STEEL CORD-RUBBER COMPOSITE AND PNEUMATIC TIRE**

STAHLSEIL-KAUTSCHUK-VERBUNDSTOFF UND LUFTREIFEN

COMPOSITE DE CÂBLE EN ACIER ET CAOUTCHOUC ET BANDAGE PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2019 JP 2019106405**

(43) Date of publication of application:
**13.04.2022 Bulletin 2022/15**

(73) Proprietor: **BRIDGESTONE CORPORATION**
**Chuo-ku**
**Tokyo 104-8340 (JP)**

(72) Inventor: **OZAKI, Takuya**
**Tokyo 104-8340 (JP)**

(74) Representative: **Marks & Clerk LLP**
**15 Fetter Lane**
**London EC4A 1BW (GB)**

(56) References cited:
EP-A1- 3 266 820          WO-A1-2015/177838
WO-A1-2016/143756        WO-A1-2019/045061
CN-A- 105 440 333        CN-A- 107 177 069
JP-A- 2002 013 083      JP-A- 2014 019 974
JP-A- 2017 007 427      JP-A- 2017 185 938
JP-A- 2020 063 368      JP-A- H0 229 325
JP-A- H02 212 524        KR-A- 20190 056 703
US-A1- 2011 172 339      US-A1- 2014 374 009
US-A1- 2020 307 314

(52) Cooperative Patent Classification (CPC): (Cont.)

C-Sets
**C08L 7/00, C08L 61/06, C08K 3/04, C08K 5/09,
C08K 5/18, C08K 5/47, C08K 3/22, C08K 3/06,
C08K 5/34922, C08K 5/40;**
D07B 2205/3089, D07B 2801/18

**Description**

Technical Field

The present invention relates to a steel cord-rubber composite including a steel cord composed of a steel wire having been subjected to ternary alloy plating on the peripheral surface thereof, or a steel cord resulting from twisting the steel wire, coated with a specified rubber composition and to a pneumatic tire using the same.

Background Art

Rubber products, such as tires, belts, and hoses, are reinforced by a reinforcing material, such as metal cords, e.g., a steel cord, and organic fibers. These rubber products are required such that a rubber composition and a reinforcing material, particularly a rubber composition and a steel cord, are firmly adhered to each other.
As this rubber composition for steel cord coating, there is known a rubber composition produced using a wet masterbatch which is obtained by mixing a slurry solution having carbon black dispersed therein with a rubber latex, wherein the carbon black has a dibutyl phthalate oil absorption (mL/100 g), as measured on the basis of JIS K6217-4:2008, of 60 mL/100 g or more and 90 mL/100 g or less and a statistical thickness specific surface area (m$^2$/g), as measured on the basis of JIS K6217-7:2013, of 100 m$^2$/g or more and 150 m$^2$/g or less, and the carbon black is blended in an amount of 35 parts by mass or more and 80 parts by mass or less based on 100 parts by mass of the rubber latex (see PTL 1).
In addition, there is disclosed a steel cord-rubber composite which is a rubber/cord composite composed of a steel cord made of a plated wire and a rubber coating this steel cord, wherein the plated wire includes a ternary alloy plating layer made of copper (Cu), zinc (Zn), and cobalt (Co) on a surface of a core wire, and the ternary alloy plating layer has a composition of a plating surface region that is a region up to a depth of 15 nm from the surface is composed of 64 to 68 wt% of copper (cu) and 0.5 to 7.0 wt% of cobalt (Co) (see PTL 2).
In the light of the above, it has been known that the adhesiveness of the steel cord-rubber composite is complemented by plating the steel cord with cobalt.
PTL 3 relates to a steel cord-rubber composite and a method for producing the steel cord-rubber composite.
PTL 4 relates to a rubber composition, a metal laminate of a rubber composition and a vulcanized rubber product.
PTL 5 relates to a metal cord-rubber composite and a tire.

Citation List

Patent Literature

PTL 1: JP 2016-37547 A
PTL 2: JP 2014-19974 A
PTL 3: JP 2017-007427 A
PTL 4: WO 2015/177838 A1
PTL 5: JP 2017-185938 A

Summary of Invention

Technical Problem

In the pneumatic tire, in addition to the adhesiveness of the steel cord-rubber composite, it is required that both crack propagation resistance and low fuel consumption are made compatible with each other to a high degree, and a case member, particularly a belt coating rubber is a member which is considered to be needed to have high durability for the sake of safety of the tire.
On the other hand, though there is a need to reduce the use amount of cobalt for the sake of environmental loading reduction, then, the amount of cobalt is reduced, not only the adhesiveness was lowered, but also an elastic modulus of rubber is lowered, so that the crack propagation resistance and the low fuel consumption of the pneumatic tire in an actual vehicle were occasionally lowered.
Then, a problem of the present invention is not only to improve the adhesiveness of the steel cord-rubber composite, particularly the adhesiveness after hygrothermal aging but also to improve the low fuel consumption while maintaining the crack propagation resistance of the pneumatic tire using this steel cord-rubber composite. Another problem of the present invention is to improve the crack propagation resistance and the low fuel consumption of the pneumatic tire using this steel cord-rubber composite and to make the both compatible with each other.

Solution to Problem

According to the present invention, there has been found a technology that in a rubber product reinforced with a steel cord, by coating a steel cord having a specified ternary alloy plating with a specified rubber composition, not only the adhesiveness of a steel cord-rubber composite, particularly the adhesiveness after hygrothermal aging is improved, but also the crack propagation resistance and the low fuel consumption of a pneumatic tire using this steel cord-rubber composite is improved.

Specifically, the present invention is concerned with the following.

[1] A steel cord-rubber composite including a rubber composition and a steel cord, wherein the rubber composition is a rubber composition containing a rubber component, a filler, a thermosetting resin, a methylene donor, a thiuram-based vulcanization accelerator, and a sulfenamide-based vulcanization accelerator; the content of a cobalt compound is 0.01 parts by mass or less based on 100 parts by mass of the rubber component; and the steel cord is a steel cord subjected to ternary alloy plating,
wherein a mass ratio [(thiuram-based vulcanization accelerator)/(thermosetting resin)] in the rubber composition is 0.02 or more and less than 0.12.

[2] The steel cord-rubber composite as set forth above in [1], wherein the filler in the rubber composition contains carbon black, and the content of the carbon black is 35 parts by mass or more and 45 parts by mass or less based on 100 parts by mass of the rubber component.

[3] The steel cord-rubber composite as set forth above in [2], wherein the carbon black has a nitrogen adsorption specific surface area of 70 $m^2$/g or more and 90 $m^2$/g or less and a dibutyl phthalate absorption amount of 50 mL/100 g or more and 110 mL/100 g or less.

[4] The steel cord-rubber composite as set forth above in any one of [1] to [3], wherein the rubber composition does not contain a cobalt compound.

[5] The steel cord-rubber composite as set forth above in any one of [1] to [4], wherein the ternary alloy plating of the steel cord is a copper-zinc-cobalt ternary system.

[6] The steel cord-rubber composite as set forth above in any one of [1] to [5], wherein the ternary alloy plating of the steel cord is subjected to a surface treatment.

[7] A tire using the steel cord-rubber composite as set forth in any one of [1] to [6].

[8] A hose, a conveyor belt, a crawler, or a rubber dam using the steel cord-rubber composite as set forth above in any one of [1] to [6].

Advantageous Effects of Invention

In accordance with the present invention, not only the adhesiveness of the steel cord-rubber composite, particularly the adhesiveness after hygrothermal aging could be improved, but also the crack propagation resistance and the low fuel consumption of the pneumatic tire using this steel cord-rubber composite could be improved and favorably made compatible with each other.

Description of Embodiments

[Steel Cord-Rubber Composite]

The steel cord-rubber composite of the present invention is a steel cord-rubber composite including a rubber composition and a steel cord, wherein the rubber composition is a unvulcanized rubber composition containing a rubber component, a filler, a thermosetting resin, a methylene donor, a thiuram-based vulcanization accelerator, and a sulfenamide-based vulcanization accelerator; the content of a cobalt compound is 0.01 parts by mass or less based on 100 parts by mass of the rubber component; and the steel cord is a steel cord subjected to ternary alloy plating.

The rubber composition according to the present invention refers to an unvulcanized rubber composition in the case where the wording "after the vulcanization" is not clearly expressed.

[Steel Cord]

The steel cord according to the steel cord-rubber composite of the present invention is a steel cord composed of a steel wire having been subjected to ternary alloy plating on the peripheral surface thereof, or a steel cord resulting from twisting the steel wire. That is, the steel wire is a constituent element of the steel cord. The ternary system of the ternary alloy plating applied on the peripheral surface of the steel wire is preferably a copper-zinc-cobalt system.

The ternary alloy plating can be formed by an already-known method. For example, a desired ternary alloy plating is obtained by repeating plating on the peripheral surface of a steel wire prior to wire drawing with copper, zinc, and cobalt in this order, copper, cobalt, and zinc in this order, or copper and an alloy of zinc and cobalt in this order, followed by thermal diffusion at 450°C or higher and 650°C or lower for 3 seconds or more and 25 seconds or less. That is, a cobalt layer is disposed on the surface of the plated steel wire.

According to the steel cord having been subjected to ternary alloy plating, it becomes possible to remove or reduce a cobalt fatty acid salt in the coating rubber composition, so that the crack propagation resistance of the aged rubber composition to be coated can be improved.

It is preferred that the steel cord having been subjected to ternary alloy plating is further subjected to a surface treatment as mentioned later.

As for the steel cord according to the present invention, the ternary alloy plating is preferably made of 58% by mass or more and 70% by mass or less of Cu, 20% by mass or more and 41.5% by mass or less of Zn, and 0.5% by mass or more and 10% by mass or less of Co.

An average thickness of the ternary alloy plating layer is suitably 0.13 to 0.35 $\mu$m, more suitably 0.13 to 0.32 $\mu$m, and especially suitably 0.13 to 0.30 $\mu$m. When the average thickness of the ternary alloy plating layer is 0.13 $\mu$m or more, a portion where an iron base is exposed becomes small, and the initial adhesiveness is improved, whereas when it is 0.35 $\mu$m or less, excessive progress of adhesive reaction owing to heat during use of a rubber article is suppressed, so that stronger adhesion can be obtained.

Furthermore, a diameter of the steel wire is preferably 0.60 mm or less, more preferably 0.50 mm or less, and still more preferably 0.40 mm or less. So long as this diameter is 0.60 mm or less, when the used rubber article repeatedly receives a strain under bending deformation, a surface strain becomes small, so that buckling is hardly caused. What the diameter of the steel wire is 0.10 mm or more is preferred in order to secure the strength.

[Production Method of Steel Cord-Rubber Composite]

Next, a production method of the steel cord-rubber composite of the present invention is described.

In producing the steel cord-rubber composite of the present invention, it is preferred that prior to adhering the steel cord and an unvulcanized rubber to each other, the steel cord is subjected to a treatment with a fatty acid ester oil. According to this, the cobalt amount in a cobalt-rich region can be more increased, and in the steel cord-rubber composite of the present invention, the adhesiveness between the rubber and the steel cord can be more improved.

Examples of a method of subjecting the steel cord having been subjected to ternary alloy plating according to the present invention to a treatment with a fatty acid ester oil include a method of applying a fatty acid ester oil immediately after wire drawing of a steel filament. Thereafter, by twisting the steel filaments applied with a fatty acid ester oil, the steel cord according to the present invention can be produced. As the method of applying a fatty acid ester oil, though an already-known method can be adopted without particular restrictions, the steel filament may be subjected to wire passing through the fatty acid ester oil, or the fatty acid ester oil may be applied onto the steel filament using a brush, etc.

In the production method according to the present invention, an attaching amount of the fatty acid ester oil to the steel cord is preferably 20 to 2,000 mg/kg in terms of a mass ratio [(attaching amount of fatty acid ester oil)/(steel cord)]. When the attaching amount of the fatty acid ester oil is less than 20 mg/kg, there may be a case where the aforementioned effects are not sufficiently obtained, whereas when it is more than 2,000 mg/kg, there may be a case where the adhesiveness to the rubber is rather lowered. By controlling the attaching amount of the fatty acid ester oil to 20 to 2,000 mg/kg, it becomes possible to further reduce the formation of an oxide film on the steel filament surface in the air by about 10 mg/kg. By applying the oil onto the steel filament having been subjected to wire drawing, since it is possible to contemplate to suppress a fluctuation in tension during wire twisting, occurrence of a failure during the steel cord production can be reduced, and the productivity can be more improved.

In producing the steel cord-rubber composite of the present invention, there are no particular restrictions except for the matter that the steel cord is treated with the fatty acid ester oil prior to adhering the steel cord and the rubber to each other, and conventional methods can be adopted.

[Surface Treatment]

It is preferred that the steel cord according to the present invention is further subjected to a surface treatment after applying the ternary alloy plating.

The surface treatment according to the present invention means that only a top surface of the ternary alloy plating layer of the steel filament having been plated with copper, zinc, and cobalt in this order is subjected to high deformation by means of wire drawing with a die. According to this high deformation, a cobalt-rich region is formed on the top surface of the ternary alloy plating layer, and the top surface of the ternary alloy plating layer is activated, so that the adhesiveness between the steel cord and the rubber composition is more improved. Here, the top surface refers to an especially extremely thin surface (within a range of 0.5 to 10 nm) in the solid surface.

It may be considered that in the case of lowering lubricity by means of wire drawing, when the steel filament material comes into contact with the die directly or via an incomplete film, the top surface of the ternary alloy plating layer is disturbed, so that the distribution of cobalt in the ternary alloy plating layer changes as the crystals become finer. As a result, the cobalt-rich region is formed on the surface of the ternary alloy plating layer.

The wiring drawing in the aforementioned surface treatment is, for example, performed in the following manner.

In order to perform the wire drawing in a state where the lubricity is lowered to some extent by wet wire drawing using a liquid lubricating liquid, the wire drawing is performed by applying wiring drawing by making the concentration of the lubricating component in the lubricating liquid lower than the concentration used for usual wire drawing, or by making the temperature of the lubricating liquid lower than the recommended temperature for using the lubricant. Although the degree to which the wire drawing is performed in a state where the lubricity is lowered depends upon the strength or wire diameter of the steel filament to be produced, for example, in the case of lowering the concentration of the lubricating component, the concentration may be controlled to 80% to 20% of the concentration of the lubricating liquid to be usually adopted in the wire drawing work of the steel filament. When the lubricity is excessively lowered, there is brought falling of the ternary alloy plating layer, degradation of the steel filament, or breaking of the wire or abrasion of the die. On the contrary, when the lubricity is not sufficiently lowered, the proportion of the cobalt-rich region becomes small, so that the adhesiveness between the rubber and the steel cord cannot be sufficiently improved.

When the heat generation during the wire drawing is too large, there is a possibility of reduction of a lattice defect density of the ternary alloy plating layer due to temperature rise, or a possibility of deterioration in ductility of the steel filament. Therefore, for example, it is preferred to set the wire drawing condition for reducing the heat generation as in the following (1) to (5) and to control a wire exiting temperature from the die measured by a contact thermometer to 150°C or lower.

(1) The reduction of area per die is set to a low value.
(2) The wire drawing speed is set to a low value.
(3) The die is cooled to suppress the temperature rise.
(4) The steel filament material entering into the die and/or the steel filament exiting from the die is cooled.
(5) In the continuous wire drawing step using a plurality of dice, the friction coefficient of one or more of the three dice located at the most downstream is set to 0.18 or more.

At this time, in order to form the cobalt-rich region, it is better to make the thickness of the ternary alloy plating layer thick. In addition, in the case of performing the production by means of wet continuous wire drawing, when the wiring drawing in a finishing die or several dice including a finishing die in the downstream of wiring drawing is performed in a state where the lubricity as mentioned above is lowered to some extent and performed in the other dice under a favorable lubrication condition, it is possible to reliably produce a ternary alloy plating layer in which the inside is crystalline, and the cobalt-rich region is formed on the surface. At this time, the amount of a phosphorus element (element symbol: P) existing on the outermost surface of the metal, in other words, the amount of a phosphorus element existing in the surface layer region from the surface of the metal to a depth of 5 nm inward is 3.0 atomic% or less.

As for the quantification of phosphorus in the surface layer region of the plating, by using X-ray photoelectron spectroscopy in an analysis area of 20 to 30 $\mu$m$\varphi$ so as not to be affected by the curvature of the steel wire, the number of atoms excluding carbon from the atoms present in the plating surface layer region of the wire, namely the number of atoms of Fe, Cu, Zn, Co, O, P, and N, is measured, and when the total number of atoms of Cu, Zn, Co, O, P, and N is defined as 100, a ratio of the number of P atom can be determined.

The number of atoms of each atom can be determined by using the count number of photoelectrons of Fe: Fe2p3 O: O1s, P: P2p, Cu: Cu2p3, Zn: Zn2p3, Co: Co2p3, and N: N1s and correcting it with a sensitivity coefficient thereof.

The number of detected atoms [P] of phosphorus can be determined according to the following equation:

[P] = Fp (sensitivity coefficient of P2p) $\times$ (count of P2p photoelectrons per fixed time)

With respect to other atoms, by determining the number of detected atoms in the same manner, the relative atom% of phosphorus can be determined from the results according to the following equation:

$$P\,(\%) = \{[P]/([Fe] + [Cu] + [Zn] + [Co] + [O] + [N] + [P])\} \times 100$$

[Rubber Composition]

The rubber composition according to the present invention is one containing a rubber component, a filler, a thermosetting resin, a methylene donor, a thiuram-based vulcanization accelerator, and a sulfenamide-based vulcanization accelerator and having the content of a cobalt compound of 0.01 parts by mass or less.

It is preferred that the rubber composition according to the present invention does not substantially contain a cobalt compound.

By decreasing the amount of the cobalt compound which is blended in the rubber composition according to the present invention to an extent of not substantially containing it and further allowing the rubber composition to contain the thermosetting resin, the methylene donor, the thiuram-based vulcanization accelerator, and the sulfenamide-based vulcanization accelerator, the rubber composition exhibiting excellent elastic modulus and crack propagation resistance can be obtained. That is, by substantially excluding the cobalt salt from the rubber composition, the crack propagation resistance is further improved, and as for the lowered adhesiveness, by performing the surface-treated ternary plating by supporting cobalt on the surface of the steel cord, and preferably extending with a diamond die, the same or better adhesive performance (particularly adhesive performance after hygrothermal aging) was ensured.

According to such a combination [(rubber composition)/(steel cord after surface treatment)], not only the adhesiveness of the steel cord-rubber composite, particularly the adhesiveness after hygrothermal aging could be improved, but also the crack propagation resistance and the low fuel consumption of the pneumatic tire using this steel cord-rubber composite could be improved and made compatible with each other.

<Rubber Component>

Examples of the rubber component which can be used for the rubber composition according to the present invention include natural rubber, epoxidized natural rubber, deproteinized natural rubber, and other modified natural rubber, and besides, various synthetic rubbers, such as polyisoprene rubber (IR), styrene-butadiene copolymer rubber (SBR), polybutadiene rubber (BR), ethylene-butadiene copolymer rubber (EBR), propylene-butadiene copolymer rubber (PBR), acrylonitrile/butadiene copolymer rubber (NBR), isoprene/isobutylene copolymer rubber (IIR), ethylene/propylene-diene copolymer rubber (EPDM), and butyl halide rubber (HR). Of these, highly saturated rubbers, such as natural rubber, styrene-butadiene copolymer rubber, and polybutadiene rubber, are preferably used, and natural rubber is especially preferably used. In addition, it is also efficient to combine several kinds of rubber components, such as a combination of natural rubber and styrene-butadiene copolymer rubber and a combination of natural rubber and polybutadiene rubber.

Examples of the natural rubber include natural rubbers of grades, such as RSS#1, RSS#3, TSR20, and SIR20. The epoxidized natural rubber is preferably one having a degree of epoxidation of 10 to 60 mol%, and examples thereof include ENR25 and ENR50, both of which are manufactured by Kumpulan Guthrie Berhad. The deproteinized natural rubber is preferably a deproteinized rubber having a total nitrogen content of 0.3% by mass or less. As the modified natural rubber, a modified natural rubber containing a polar group, which is obtained by previously reacting natural rubber with 4-vinylpyridine, an N,N-dialkylaminoethyl acrylate, such as N,N-diethylaminoethyl acrylate, 2-hydroxyacrylate, or the like, is used as the need arises.

A proportion of the natural rubber occupying in the rubber component is preferably 70% by mass or more.

<Thermosetting Resin>

Although the thermosetting resin according to the present invention is not particularly restricted, a resin containing, as a structural unit, phenol or resorcin is preferred, and a phenol resin is especially preferably used.

The content of the thermosetting resin according to the present invention is preferably more than 4 parts by mass and 20 parts by mass or less, more preferably more than 4 parts by mass and 18 parts by mass or less, still more preferably more than 4 parts by mass and 16 parts by mass or less, and especially preferably more than 4 parts by mass and 14 parts by mass or less based on 100 parts by mass of the rubber component.

When the content of the thermosetting resin according to the present invention is more than 4 parts by mass based on 100 parts by mass of the rubber component, sufficient adhesiveness (particularly adhesiveness after hygrothermal aging) is obtained.

When the blending amount of the thermosetting resin is 20 parts by mass or less based on 100 parts by mass of the rubber component, the adhesive reaction does not excessively proceed during vulcanization, so that lowering of the adhesiveness (particularly the adhesiveness after hygrothermal aging) can be prevented from occurring.

A softening point of the thermosetting resin according to the present invention is preferably 150°C or lower, more preferably in a range of 80°C or higher and 150°C or lower, still more preferably in a range of 80°C or higher and 140°C or lower, and especially preferably 90°C or higher and 140°C or lower.

When the softening point of the thermosetting resin is higher than 150°C, in the rubber composition, on the occasion of blending the rubber composition during kneading, a problem of poor dispersibility is caused. As a result, there may be a case where, for example, the adhesiveness is lowered, so that it becomes unsuitable as an adhesive to the steel cord. When the softening point of the thermosetting resin is lower than 80°C, there may be a case where blocking occurs during preservation.

<Methylene Donor>

Examples of the methylene donor which can be blended in the rubber composition according to the present invention include ones which are typically used in the rubber industry, such as hexamethoxymethylmelamine (HMMM), a modified etherified methylolmelamine resin, hexamethylenetetramine (HMT), pentakis(methoxymethyl)methylolmelamine, and tetrakis(methoxymethyl)dimethylolmelamine. Above all, hexamethoxymethylmelamine alone, a modified etherified methylolmelamine resin alone, or a mixture composed mainly of the same is preferred. These methylene donors can be each used alone or in combination of two or more thereof. The blending amount thereof is preferably 0.5 parts by mass or more and 10 parts by mass or less, more preferably 1 part by mass or more and 10 parts by mass or less, still more preferably 1 part by mass or more and 8 parts by mass or less, and especially preferably 1 part by mass or more and 6 parts by mass or less based on 100 parts by mass of the aforementioned rubber component.

When the foregoing blending amount is 0.5 parts by mass or more, the thermosetting resin can be cured, and when it is 10 parts by mass or less, it is possible to prevent the vulcanization rate of the rubber composition from becoming too fast.

<Cobalt Compound>

Examples of the cobalt compound which the rubber composition according to the present invention does not substantially contain include an organic acid cobalt salt and a cobalt metal complex, with an organic acid cobalt salt being preferred.

In the present invention, what the cobalt compound is not substantially contained means that the content of cobalt in the cobalt compound is 0.01 parts by mass or less based on 100 parts by mass of the rubber component. The foregoing content is preferably 0.005 parts by mass or less, more preferably 0.002 parts by mass or less, and still more preferably 0.001 parts by mass or less, and it is especially preferred that cobalt is not contained.

Examples of the organic acid cobalt salt include cobalt naphthenate, cobalt stearate, cobalt neodecanoate, cobalt rosinate, cobalt versatate, tall oil acid cobalt, cobalt oleate, cobalt linoleate, cobalt linolenate, and cobalt palmitate. In addition, examples of cobalt metal complex include cobalt acetyl acetonate.

<Vulcanization Accelerator>

The vulcanization accelerator which the rubber composition according to the present invention contains is a thiuram-based vulcanization accelerator and a sulfenamide-based vulcanization accelerator. In addition, other vulcanization accelerator may also be contained as the need arises.

Although the content of the vulcanization accelerator is not particularly limited, it is preferably in a range of 0.5 parts by mass or more and 10 parts by mass or less, more preferably in a range of 0.5 parts by mass or more and 8 parts by mass or less, still more preferably in a range of 0.5 parts by mass or more and 7 parts by mass or less, and especially preferably in a range of 0.5 parts by mass or more and 6 parts by mass or less based on 100 parts by mass of the rubber component.

<Thiuram-based Vulcanization Accelerator>

Examples of the thiuram-based vulcanization accelerator which the rubber composition according to the present invention contains include tetrakis(2-ethylhexyl)thiuram disulfide, tetraethylthiuram disulfide, tetramethylthiuram disulfide, tetrabutylthiuram disulfide, tetramethylthiuram monosulfide, dipentamethylenethiuram tetrasulfide, and tetrabenzylthiuram disulfide.

Here, as for commercially available products, examples of the tetrakis(2-ethylhexyl)thiuram disulfide include a trade name "NOCCELER TOT", manufactured by Ouchi Shinko Chemical Industry Co., Ltd.; examples of the tetraethylthiuram disulfide include a trade name "NOCCELER TET", manufactured by Ouchi Shinko Chemical Industry Co., Ltd.; examples of the tetramethylthiuram disulfide include a trade name "NOCCELER TT", manufactured by Ouchi Shinko Chemical Industry Co., Ltd.; examples of the tetrabutylthiuram disulfide include a trade name "NOCCELER TBT", manufactured by Ouchi Shinko Chemical Industry Co., Ltd.; examples of the tetramethylthiuram monosulfide include a trade name "NOCCELER TS", manufactured by Ouchi Shinko Chemical Industry Co., Ltd.; examples of the dipentamethylenethiuram tetrasulfide include a trade name "NOCCELER TRA", manufactured by Ouchi Shinko Chemical Industry Co., Ltd.; and examples of the tetrabenzylthiuram disulfide include a trade name "ACCEL TBZT", manufactured by Kawaguchi Chemical Industry Co., Ltd.

The content of the thiuram-based vulcanization accelerator is preferably 0.1 parts by mass or more and 0.2 parts by mass or more, and preferably 5 parts by mass or less, 3 parts by mass or less, 2 parts by mass or less, 1 part by mass or less, and less than 0.7 parts by mass based on 100 parts by mass of the rubber component.

<Sulfenamide-based Vulcanization Accelerator>

Examples of the thiuram-based vulcanization accelerator which the rubber composition according to the present invention contains include N-cyclohexyl-2-benzothiazolyl sulfenamide (CBS), N-tert-butyl-2-benzothiazolyl sulfenamide (BBS), and N-oxydiethylene-2-benzothiazolyl sulfenamide.

Here, as for commercially available products, examples of the N-cyclohexyl-2-benzothiazolyl sulfenamide (CBS) include a trade name "NOCCELER CZ", manufactured by Ouchi Shinko Chemical Industry Co., Ltd.; examples of the N-tert-butyl-2-benzothiazolyl sulfenamide (BBS) include a trade name "NOCCELER NS", manufactured by Ouchi Shinko Chemical Industry Co., Ltd.; and examples of the N-oxydiethylene-2-benzothiazolyl sulfenamide include a trade name "NOCCELER MSA", manufactured by Ouchi Shinko Chemical Industry Co., Ltd. and a trade name "ACCEL NS", manufactured by Kawaguchi Chemical Industry Co., Ltd.

The content of the sulfenamide-based vulcanization accelerator is preferably in a range of 0.3 parts by mass or more and 8 parts by mass or less, more preferably in a range of 0.4 parts by mass or more and 7 parts by mass or less, still more preferably in a range of 0.4 parts by mass or more and 6 parts by mass or less, and especially preferably in a range of 0.4 parts by mass or more and 5 parts by mass or less based on 100 parts by mass of the rubber component.

Furthermore, it is preferred that a vulcanization accelerator, N,N-dicyclohexyl-2-benzothiazolyl sulfenamide is contained in an amount of 0.1 parts by mass or less, and it is more preferred that such a vulcanization accelerator is not contained.

A mass ratio [(sulfenamide-based vulcanization accelerator)/(thiuram-based vulcanization accelerator)] is preferably more than 1 and 10 or less, more preferably 1.1 to 8, still more preferably 1.2 to 6, and yet still more preferably 1.2 to 5.

A mass ratio [(thiuram-based vulcanization accelerator)/(thermosetting resin)] in the rubber composition according to the present invention is 0.02 or more and less than 0.12. This is because the curing reaction of the thermosetting resin is accelerated, so that the crack propagation resistance can be improved. From this viewpoint, what the aforementioned mass ratio is 0.02 or more is preferred because the acidity at which the curing reaction of the thermosetting resin is accelerated is revealed, whereas what the aforementioned mass ratio is less than 0.12 is preferred because the monosulfide crosslinking of a sulfur network does not excessively increase. The mass ratio [(thiuram-based vulcanization accelerator)/(thermosetting resin)] is more preferably 0.03 or more and 0.10 or less, and still more preferably 0.05 or more and 0.08 or less.

It is preferred that the rubber composition according to the present invention contains, as the sulfenamide-based vulcanization accelerator, N-cyclohexyl-2-benzothiazolyl sulfenamide (CBS).

In the present invention, the content of the vulcanization accelerator, N-cyclohexyl-2-benzothiazolyl sulfenamide (CBS) is preferably 0.1 parts by mass or more and 8.0 parts by mass or less, more preferably 0.2 parts by mass or more and 6.0 parts by mass or less, still more preferably 0.3 parts by mass or more and 5.0 parts by mass or less, and especially preferably 0.4 parts by mass or more and 4.0 parts by mass or less based on 100 parts by mass of the rubber component.

<Other Vulcanization Accelerator>

In the vulcanization accelerator which the rubber composition according to the present invention contains, other vulcanization accelerator than the thiuram-based vulcanization accelerator and the sulfenamide-based vulcanization accelerator may be contained as the need arises. Examples thereof include a thiazole-based vulcanization accelerator, such as 2-mercaptobenzothiazole (MBT) and dibenzothiazyl disulfide (MBTS); a guanidine-based vulcanization accelerator, such as diphenylguanidine (DPG), 1,3-di-o-tolylguanidine (DOTG), and 1-o-tolylbiguanidine (OTBG); and a thiourea-based vulcanization accelerator, such as trimethylthiourea (TMU), N,N'-diethylthiourea (DEU), and N,N'-diphenylthiourea.

<Filler>

In the rubber composition according to the present invention, a filler can be blended as the need arises. The filler is preferably at least one selected from carbon black and an inorganic filler. In the present invention, it should be construed that the carbon black is not included in the inorganic filler.

In the rubber composition according to the present invention, the content of the filler to be used (that is, the total amount of the carbon black and the inorganic filler) is preferably 10 parts by mass or more and 100 parts by mass or less based on 100 parts by mass of the rubber component. What the foregoing content is 10 parts by mass or more is preferred from the viewpoint of ensuring the elastic modulus, and what it is 100 parts by mass or less is preferred from the viewpoint of improving the low fuel consumption. From the aforementioned viewpoint, the total amount of the carbon black and the inorganic filler is more preferably 20 parts by mass or more and 100 parts by mass or less based on 100 parts by mass of the rubber component, still more preferably 20 parts by mass or more and 80 parts by mass or less, and especially preferably 30 parts by mass or more and 80 parts by mass or less based on 100 parts by mass of the rubber component.

<Carbon Black>

When the rubber composition according to the present invention contains the carbon black, the electric resistance is reduced, so that an effect for suppressing electrification can be brought. As the carbon black, high, medium, or low structure SAF, ISAF, IISAF, N339, HAF, FEF, GPF, and SRF grade carbon blacks, especially SAF, ISAF, IISAF, N339, HAF, and FEF grade carbon blacks can be used.

By using carbon black having a low dibutyl phthalate absorption amount (DBP absorption amount), namely a carbon black having a low structure, the low fuel consumption of the rubber composition according to the present invention can be improved.

From this viewpoint, a nitrogen adsorption specific surface area ($N_2SA$, as measured in conformity with JIS K6217-2:2001) of the carbon black is preferably 70 $m^2/g$ or more and 90 $m^2/g$ or less, and HAF-grade carbon black (e.g., HAF or HAF-LS) in which the dibutyl phthalate absorption amount (DBP absorption amount, as measured in conformity with JIS K6217-4:2008) is 50 mL/100 g or more and 110 mL/100 g or less is preferred.

As the carbon black, one selected from those mentioned above may be used alone, or a combination of two or more thereof may be used.

The content of the carbon black is preferably 30 parts by mass or more and 80 parts by mass or less, more preferably 30 parts by mass or more and 70 parts by mass or less, still more preferably 35 parts by mass or more and 60 parts by mass or less, and especially preferably 35 part by mass or more and 45 parts by mass or less based on 100 parts by mass of the rubber component. By decreasing the content of the carbon black, the low fuel consumption of the rubber composition according to the present invention can be improved.

<Inorganic Filler>

Examples of the inorganic filler which is used for the rubber composition according to the present invention as the need arises include silica and at least one metal, metal oxide, or metal hydroxide selected from aluminum, magnesium, titanium, calcium, and zirconium. However, silica having high reinforcing properties is preferred.

As for the rubber composition according to the present invention, in the case where an inorganic filler including silica is blended, a silane coupling agent can be blended for the purpose of more improving the reinforcing properties and the low fuel consumption of the rubber composition.

<Other Blending Agent>

In the rubber composition according to the present invention, various chemicals which are typically used in the rubber industry, for example, a vulcanizer, a vulcanization retardant, a process oil, an antiaging agent, zinc oxide, and stearic acid, can be blended according to the desire within the range where the effects of the present invention are not impaired.

(Vulcanizer)

Examples of the vulcanizer which can be blended in the rubber composition according to the present invention include sulfur. Examples of the sulfur component include powdered sulfur, precipitated sulfur, colloidal sulfur, insoluble sulfur, and highly dispersible sulfur. Typically, insoluble sulfur and powdered sulfur are preferred.

The use amount of the vulcanizer is 1 part by mass or more and 12 parts by mass or less, more preferably 1 part by mass or more and 10 parts by mass or less, and still more preferably 1.0 part by mass or more and 8.0 parts by mass or less in terms of a sulfur component based on 100 parts by mass of the rubber component. When the foregoing use amount is less than 1 part by mass, there is a concern that breaking strength, abrasion resistance, and low fuel consumption of the rubber composition after vulcanization (hereinafter occasionally abbreviated as "vulcanized rubber") are lowered, whereas when it is more than 12 parts by mass, rubber elasticity is caused to be lost.

(Antiaging Agent)

Examples of the antiaging agent which can be blended in the rubber composition according to the present invention include ones described at pages 436 to 443 of "Rubber Industry Handbook <fourth Edition>", edited by The Society of Rubber Science and Technology, Japan. Of these, there are exemplified 3C (N-isopropyl-N'-phenyl-p-phenylenediamine), 6C [N- (1,3-dimethylbutyl) -N'-phenyl-p-phenylenediamine], RD or 224 (2,2,4-trimethyl-1,2-dihydroquinoline polymer), AW (6-ethoxy-2,2,4-trimethyl-1,2-dihydroquinoline), and a high-temperature condensate of diphenylamine and acetone.

The use amount thereof is preferably 0.1 to 8.0 parts by mass, more preferably 0.1 to 6.0 parts by mass, and especially preferably 0.3 to 5.0 parts by mass based on 100 parts by mass of the rubber component.

[Preparation of Rubber Composition]

The rubber composition according to the present invention is obtained by kneading the aforementioned various components and additives by using a kneader, such as an open type kneader, e.g., a roll, or a closed kneader, e.g., a Banbury mixer.

That is, the rubber composition according to the present invention can be prepared by kneading the rubber component, the filler, the thermosetting resin, the reinforcing resin, and other blending agent for masterbatch at the first stage of kneading (masterbatch kneading stage) and then mixing the vulcanizer, the vulcanization accelerator, the methylene donor, and optionally other blending agent at the final stage of kneading.

[Fabrication of Pneumatic Tire]

The rubber composition according to the present invention is coated on the steel cord according to the present invention to form a steel cord-rubber composite and then subjected to sticking and molding on a tire molding machine by a usual method, thereby molding a green tire. After molding the green tire, this green tire is heated and pressurized in a vulcanizer and vulcanized, whereby a tire provided with the steel cord-rubber composite according to the present invention can be fabricated. The steel cord-rubber composite according to the present invention is suitably used for a belt member of a pneumatic tire, a belt member of a large-sized pneumatic tire, a carcass member, and a bead reinforcing member.

Examples

The present invention is hereunder described in detail by reference to Examples and Comparative Examples, but it should be construed that the present invention is not limited thereto.

[Production of Steel Cord]

(Steel Cord A)

On a steel wire having a diameter of 1.7 mm, plating was repeated with 63.0% by mass of Cu and 37.0% by mass of Zn in the order of Cu and Zn. Thereafter, a thermal diffusion treatment was performed at 550°C for 5 seconds to obtain a desired alloy plating, which was then subjected to wire drawing to obtain a steel wire having a plating average thickness of 0.25 $\mu$m and a diameter of 0.30 mm. Using the respective steel wires thus obtained, a steel cord A that is a twisted cord of a structure of $1 \times 3 \times 0.30$ (mm) was fabricated.

(Steel Cord B)

On a steel wire having a diameter of 1.7 mm, plating was repeated with 67.0% by mass of Cu, 29.0% by mass of Zn, and 4.0% by mass of Co in the order of Cu, Zn, and Co. Thereafter, a thermal diffusion treatment was performed at 550°C for 5 seconds to obtain a desired ternary alloy plating, which was then subjected to wire drawing to obtain a steel wire having a plating average thickness of 0.25 $\mu$m and a diameter of 0.30 mm. Using the respective steel wires thus obtained, a steel cord B that is a twisted cord of a structure of $1 \times 3 \times 0.30$ (mm) was fabricated.

(Steel Cord C)

On a steel wire having a diameter of 1.7 mm, plating was repeated with 67.0% by mass of Cu, 29.0% by mass of Zn, and 4.0% by mass of Co in the order of Cu, Zn, and Co. Thereafter, a thermal diffusion treatment was performed at 550°C for 5 seconds to obtain a desired ternary alloy plating, and then, only a top surface of the ternary alloy plating layer was subjected to high deformation (surface treatment) by means of wire drawing with a diamond die. There was thus obtained a steel wire having a plating average thickness of 0.25 μm and a diameter of 0.30 mm.

Using the respective steel wires thus obtained, a steel cord C that is a twisted cord of a structure of 1 × 3 × 0.30 (mm) was fabricated.

Examples 1 to 5 and Comparative Examples 1 to 5

According to the blending formulations shown in the following Tables 1 and 2, first of all, a natural rubber, the carbon black A, a phenol resin, an antiaging agent 6C, and stearic acid were kneaded with a Banbury mixer, and the kneaded mixture was discharged at the point of time of reaching 160°C. Subsequently, the resulting mixture was kneaded with a phenol resin, and the kneaded mixture was discharged at the point of time of reaching 140°C. Furthermore, a methylene donor, zinc oxide, sulfur, and a vulcanization accelerator were added and mixed with a 6-inch open roll, manufactured by Kansai Roll Co., Ltd. kept at 60°C, to prepare a rubber composition for steel cord coating. However, in Comparative Example 1, the stearic acid was not blended, but an organic acid cobalt salt was blended. In addition, Comparative Examples 2 and 3, the phenol resin and the methylene donor were not blended. The units of the numerical values in the blending formulations in Tables 1 and 2 express a part by mass.

Subsequently, seven kinds of the rubber compositions obtained in Examples 1 to 4 and Comparative Examples 1 to 3 were vulcanized at 160°C for 20 minutes, to fabricate seven kinds of vulcanized rubber sheets having a thickness of 2 mm, and the crack propagation resistance of each of the vulcanized rubbers after aging was evaluated. The results are shown in Table 1.

As for the condition of aging, the test sample was allowed to stand in an oven at 100°C for 24 hours.

The steel cord-rubber composites are fabricated in the following manner as shown in Tables 1 and 2.

The rubber compositions of Examples 1 to 2 and 4 and Comparative Examples 3 and 5 are each combined with the steel cord B, thereby fabricating steel cord-rubber composites of Examples 1 to 2 and 4 and Comparative Examples 3 and 5.

In addition, the rubber compositions of Examples 3 and 5 and Comparative Example 2 are each combined with the steel cord C, thereby fabricating steel cord-rubber composites of Examples 3 and 5 and Comparative Example 2.

Furthermore, the rubber compositions of Comparative Examples 1 and 4 are each combined with the steel cord A, thereby fabricating steel cord-rubber composites of Comparative Examples 1 and 4.

The steel cord-rubber composites of Examples 1, 3, and 5 and Comparative Examples 4 and 5 were each vulcanized at 160°C for 20 minutes and evaluated for the adhesiveness after the following hygrothermal aging. The results are shown in Table 2.

Next, the rubber compositions of Examples 1 to 4 and Comparative Examples 1 to 3 as shown in Table 1 were each combined with the steel cord A, B, or C, to fabricate steel cord-rubber composites (thickness of rubber composition for steel cord coating: 1 mm) and produce two sheets of cross-layer belts. Then, seven kinds of pneumatic tires for passenger cars (tire size: 195/65R15) are fabricated.

[Evaluation Methods of Steel Cord-Rubber Composite, Rubber Composition after Vulcanization, and Pneumatic Tire]

(a) Adhesiveness after Hygrothermal Aging

Steel cords were arranged in parallel at intervals of 12.5 mm; the steel cords were coated with a rubber composition from upper and lower sides; and the resultant was vulcanized at 160°C for 20 minutes to adhere the rubber composition and the steel cords to each other. There was thus obtained a steel cord-rubber composite in which the steel cords were embedded between the rubber sheets having a thickness of 1 mm (the steel cords are arranged in parallel at intervals of 12.5 mm on the sheet surface in the direction of the center of the thickness of the rubber sheet). After aging this steel cord-rubber composite in an atmosphere at 75°C and a relative humidity of 95% for 10 days, the steel cords were pulled out from each sample in conformity with ASTM D2292-2004, and the coverage of the rubber attached onto the steel cord was determined through visual observation with 0 to 100% and used as an index of thermal degradation. The results are expressed in terms of an index while defining Example 3 as 100. It is expressed that the larger the index value, the more excellent the hygrothermal adhesiveness. That is, it expresses that the thermal degradation resistance is excellent.

Adhesiveness index after hygrothermal aging = {(Coverage of rubber attached onto steel cord of test sample)/(Coverage of rubber attached onto steel cord of sample of Example 3)} × 100

(b) Crack Propagation Resistance

The aforementioned unvulcanized sample was vulcanized at 160°C for 20 minutes to fabricate a vulcanized rubber sample having a thickness of 2 mm; after aging, the resulting sample was subjected to a constant stress fatigue test with a fatigue tester FT-3100, manufactured by Ueshima Seisakusho Co., Ltd.; and the number of times until fracture was measured. The results are shown as expressed in terms of an index while defining Comparative Example 2 as 100. It is expressed that the larger the index value, the more excellent the crack propagation resistance after aging.

Crack propagation resistance index after aging = {(Number of times until fracture of test sample)/(Number of times until fracture of sample of Comparative Example 2)} $\times$ 100

(c) Low Fuel Consumption

(i) Evaluation by Tire

With respect to Examples 1 and 3 and Comparative Examples 1 and 2, a rolling resistance was measured in conformity of an indoor rolling resistance test prescribed in The Japan Automobile Tyre Manufacturers Association, Inc. (JATMA). An index is expressed while defining the rolling resistance of the tire of Comparative Example 2 as 100. It is expressed that the smaller the numerical value, the lower the rolling resistance, exhibiting low fuel consumption.

Low fuel consumption index = {(Rolling resistance value of test tire)/(Rolling resistance value of tire of Comparative Example 2)} $\times$ 100

(ii) Evaluation by Vulcanized Rubber

With respect to Examples 2 and 4 and Comparative Example 3, the results of evaluation of vulcanized rubber are expressed in terms of an index by measuring the vulcanized rubber of Comparative Example 2 for tan $\delta$ (loss tangent) at 25°C under a condition of an initial load of 600 $\mu$m, a strain of 1%, and a frequency of 52 Hz with a spectrometer, manufactured by Ueshima Seisakusho Co., Ltd. and defining the measured value as 100. It is expressed that the smaller the numerical value, the lower the rolling resistance, exhibiting low fuel consumption.

Low fuel consumption index = {(tan $\delta$ of test material)/(tan $\delta$ of Comparative Example 2) $\times$ 100

In Table 1 Example 4 is provided as reference example.

Table 1

| Unit of blending formulation: parts by mass | | Example | | | | Comparative Example | | |
|---|---|---|---|---|---|---|---|---|
| | | 1 | 2 | 3 | 4 | 1 | 2 | 3 |
| Blending formulation of rubber composition | Natural rubber *1 | 100 | 100 | 100 | 100 | 100 | 100 | 100 |
| | Carbon black A *2 | 40 | 40 | 40 | 40 | 40 | 40 | 40 |
| | Phenol resin *3 | 5 | 5 | 7 | 5 | 5 | - | - |
| | Organic acid cobalt salt *4 | - | - | - | - | 0.9 | - | - |
| | Stearic acid *5 | 0.9 | 0.9 | 0.9 | 0.9 | - | 0.9 | 0.9 |
| | Antiaging agent 6C *6 | 2 | 2 | 2 | 2 | 2 | 2 | 2 |
| | Methylene donor *7 | 2.5 | 2.5 | 3.5 | 2.5 | 2.5 | - | - |
| | Vulcanization accelerator DCBS *8 | - | - | - | - | 1.2 | - | - |
| | Vulcanization accelerator CBS *9 | 0.9 | 1.2 | 0.9 | 0.9 | - | 0.9 | 0.9 |
| | Thiuram-based vulcanization accelerator *10 | 0.3 | 0.3 | 0.5 | 0.7 | - | - | 0.3 |
| | Zinc oxide *11 | 8 | 8 | 8 | 8 | 8 | 8 | 8 |
| | Sulfur *12 | 6 | 6 | 6 | 6 | 6 | 6 | 6 |
| Mass ratio {(thiuram-based vulcanization accelerator)/(phenol resin)} | | 0.06 | 0.06 | 0.07 | 0.14 | - | - | - |

(continued)

| Unit of blending formulation: parts by mass | | Example | | | | Comparative Example | | |
|---|---|---|---|---|---|---|---|---|
| | | 1 | 2 | 3 | 4 | 1 | 2 | 3 |
| Steel cord species | | B | B | C | B | A | C | B |
| Tire performance | Crack propagation resistance | 126 | 127 | 135 | 92 | 118 | 100 | 91 |
| | Low fuel consumption | 91 | 85 | 99 | 91 | 108 | 100 | 94 |

Table 2

| Unit of blending formulation: parts by mass | | Example | | | Comparative Example | |
|---|---|---|---|---|---|---|
| | | 1 | 3 | 5 | 4 | 5 |
| Blending formulation of rubber composition | Natural rubber *1 | 100 | 100 | 100 | 100 | 100 |
| | Carbon black A *2 | 40 | 40 | 40 | 40 | 40 |
| | Phenol resin *3 | 5 | 7 | 5 | 5 | 5 |
| | Organic acid cobalt salt *4 | - | - | - | - | - |
| | Stearic acid *5 | 0.9 | 0.9 | 0.9 | 0.9 | 0.9 |
| | Antiaging agent 6C *6 | 2 | 2 | 2 | 2 | 2 |
| | Methylene donor *7 | 2.5 | 3.5 | 2.5 | 2.5 | 2.5 |
| | Vulcanization accelerator DCBS *8 | - | - | - | 1.2 | 1.2 |
| | Vulcanization accelerator CBS *9 | 0.9 | 0.9 | 0.9 | - | - |
| | Thiuram-based vulcanization accelerator *10 | 0.3 | 0.5 | 0.3 | - | - |
| | Zinc oxide *11 | 8 | 8 | 8 | 8 | 8 |
| | Sulfur *12 | 6 | 6 | 6 | 6 | 6 |
| Mass ratio {(thiuram-based vulcanization accelerator)/(phenol resin)} | | 0.06 | 0.07 | 0.06 | - | - |
| Steel cord species | | B | C | C | A | B |

(continued)

| Unit of blending formulation: parts by mass | | Example | | | Comparative Example | |
|---|---|---|---|---|---|---|
| | | 1 | 3 | 5 | 4 | 5 |
| Tire performance | Adhesiveness after hygrothermal aging | 77 | 100 | 100 | 35 | 71 |

*1 to *11 described in Tables 1 and 2 are as follows.

*1: Natural rubber: SMR-CV60 *2: Carbon black A: HAF-grade carbon black (HAF-LS), a trade name: "ASAHI #70L", manufactured by Asahi Carbon Co., Ltd., DBP absorption amount: 75 cm$^3$/100 g, nitrogen adsorption specific surface area: 84 m$^2$/g

*3: Phenol resin: thermosetting resin, a trade name: "SUMILITE RESIN PR-50235", manufactured by Sumitomo Bakelite Co., Ltd. (softening point: 121°C) *4: Organic acid cobalt salt: "MANOBOND C", manufactured by OMG (complex salt in which a part of the organic acid in the organic acid cobalt salt is replaced by boric acid, cobalt content: 22.0% by mass) *5: Stearic acid: a trade name: "STEARIC ACID C1870", manufactured by New Japan Chemical Co., Ltd.

*6: Antiaging agent 6C: N-phenyl-N'-(1,3-dimethylbutyl)-p-phenylenediamine, a trade name: "NOCRAC 6C", manufactured by Ouchi Shinko Chemical Industry Co., Ltd.

*7: Methylene donor: hexamethoxymethylmelamine (HMMM): a trade name: "CYREZ 964LF", manufactured by ALLNEX *8: Vulcanization accelerator DCBS: N,N-dicyclohexyl-2-benzothiazolyl sulfenamide, a trade name: "NOCCELER DZ", manufactured by Ouchi Shinko Chemical Industry Co., Ltd.

*9: Vulcanization accelerator CBS: N-cyclohexyl-2-benzothiazolyl sulfenamide, a trade name: "NOCCELER CZ", manufactured by Ouchi Shinko Chemical Industry Co., Ltd.

*10: Thiuram-based vulcanization accelerator: a trade name: "NOCCELER TOT", manufactured by Ouchi Shinko Chemical Industry Co., Ltd.

*11: Zinc oxide: a trade name: "ZINC OXIDE #2", manufactured by Seido Chemical Industry Co., Ltd.

*12: Sulfur: insoluble sulfur, a trade name: "CRYSTEX HS OT-20", manufactured by Flexsys

As is evident from Table 1, as compared with the rubber compositions of Comparative Examples 1 to 3, the rubber compositions of Examples 1 to 3 according to the present invention are favorable with respect to the crack propagation resistance.

In addition, as compared with the steel cord-rubber composites of Comparative Examples 1 to 3, the steel cord-rubber composites of Examples 1 to 4 are equal to or greater with respect to the low fuel consumption.

As compared with the rubber composition of Comparative Example 3, the rubber composition of Example 4 according to the present invention is equal to or greater with respect to the crack propagation resistance and more favorable with respect to the low fuel consumption.

In Comparative Example 1, though the crack propagation resistance is favorable, the low fuel consumption is inferior, and there is a long way before making both properties compatible with each other.

In the light of the above, in accordance with the rubber composition according to the present invention, it is possible to improve the low fuel consumption while keeping the same crack propagation resistance as that in Comparative Example 2 as the basis.

Next, as is evident from Table 2, all of the steel cord-rubber composites of Examples 1, 3, and 5 according to the present invention are favorable with respect to the adhesiveness after hygrothermal aging as compared with the steel cord-rubber composites of Comparative Examples 4 to 5.

In view of the fact that in the rubber composition according to the present invention, the content of the cobalt compound is controlled to 0.01 parts by mass or less based on 100 parts by mass of the rubber component, it contributed to environmental loading reduction.

Industrial Applicability

The steel cord-rubber composite of the present invention is suitable as a reinforcing member of belt or carcass of various tires, such as radial tires for passenger cars and tires for trucks or busses. In addition, the steel cord-rubber composition of the present invention is also suitable as a reinforcing member of rubber articles other than tires, such as a hose, a conveyor belt, a crawler (particularly a rubber crawler), and a rubber dam.

**Claims**

1. A steel cord-rubber composite comprising a rubber composition and a steel cord, wherein

   the rubber composition is a rubber composition containing a rubber component, a filler, a thermosetting resin, a methylene donor, a thiuram-based vulcanization accelerator, and a sulfenamide-based vulcanization accelerator; the content of a cobalt compound is 0.01 parts by mass or less based on 100 parts by mass of the rubber component; and
   the steel cord is a steel cord subjected to ternary alloy plating,
   wherein a mass ratio [(thiuram-based vulcanization accelerator)/(thermosetting resin)] in the rubber composition is 0.02 or more and less than 0.12.

2. The steel cord-rubber composite according to claim 1, wherein the filler in the rubber composition contains carbon black, and the content of the carbon black is 35 parts by mass or more and 45 parts by mass or less based on 100 parts by mass of the rubber component.

3. The steel cord-rubber composite according to claim 2, wherein the carbon black has a nitrogen adsorption specific surface area of 70 $m^2$/g or more and 90 $m^2$/g or less, as measured in conformity with JIS K6217-2:2001, and a dibutyl phthalate absorption amount of 50 mL/100 g or more and 110 mL/100 g or less, as measured on the basis of JIS K6217-4:2008.

4. The steel cord-rubber composite according to any one of claims 1 to 3, wherein the rubber composition does not contain a cobalt compound.

5. The steel cord-rubber composite according to any one of claims 1 to 4, wherein the ternary alloy plating of the steel cord is a copper-zinc-cobalt ternary system.

6. The steel cord-rubber composite according to any one of claims 1 to 5, wherein the ternary alloy plating of the steel cord is subjected to a surface treatment.

7. A tire using the steel cord-rubber composite according to any one of claims 1 to 6.

8. A hose, a conveyor belt, a crawler, or a rubber dam using the steel cord-rubber composite according to any one of claims 1 to 6.

**Patentansprüche**

1. Stahlseil-Kautschuk-Verbundwerkstoff, umfassend eine Kautschukzusammensetzung und ein Stahlseil, wobei

   die Kautschukzusammensetzung eine Kautschukzusammensetzung ist, die eine Kautschukkomponente, einen Füllstoff, ein duroplastisches Harz, einen Methylendonator, einen Vulkanisationsbeschleuniger auf Thiurambasis und einen Vulkanisationsbeschleuniger auf Sulfenamidbasis enthält, wobei der Gehalt an einer Kobaltverbindung 0,01 Masseteile oder weniger beträgt, bezogen auf 100 Masseteile der Kautschukkomponente; und
   das Stahlseil ein Stahlseil ist, das einer ternären Legierungsplattierung unterzogen wurde,
   wobei ein Massenverhältnis [(Vulkanisationsbeschleuniger auf Thiurambasis)/(duroplastisches Harz)] in der Kautschukzusammensetzung 0,02 oder mehr und weniger als 0,12 beträgt.

2. Stahlseil-Kautschuk-Verbundwerkstoff nach Anspruch 1, wobei der Füllstoff in der Kautschukzusammensetzung Ruß enthält und der Rußgehalt 35 Masseteile oder mehr und 45 Masseteile oder weniger, bezogen auf 100 Masseteile der Kautschukkomponente, beträgt.

3. Stahlseil-Kautschuk-Verbundwerkstoff nach Anspruch 2, wobei der Ruß eine spezifische Stickstoffadsorptionsoberfläche von 70 $m^2$/g oder mehr und 90 $m^2$/g oder weniger, gemessen gemäß JIS K6217-2:2001, und eine Dibutylphthalat-Absorptionsmenge von 50 mL/100 g oder mehr und 110 mL/100 g oder weniger, gemessen auf Basis von JIS K6217-4:2008, aufweist.

4. Stahlseil-Kautschuk-Verbundwerkstoff nach einem der Ansprüche 1 bis 3, wobei die Kautschukzusammensetzung keine Kobaltverbindung enthält.

5. Stahlseil-Kautschuk-Verbundwerkstoff nach einem der Ansprüche 1 bis 4, wobei die ternäre Legierungsplattierung des Stahlseils ein ternäres Kupfer-Zink-Kobalt-System ist.

6. Stahlseil-Kautschuk-Verbundwerkstoff nach einem der Ansprüche 1 bis 5, wobei die ternäre Legierungsplattierung des Stahlseils einer Oberflächenbehandlung unterzogen wird.

7. Reifen, der den Stahlseil-Kautschuk-Verbundwerkstoff nach einem der Ansprüche 1 bis 6 verwendet.

8. Schlauch, Förderband, Raupenfahrzeug oder Kautschukdamm, der/das den Stahlseil-Kautschuk-Verbundwerkstoff nach einem der Ansprüche 1 bis 6 verwendet.

**Revendications**

1. Composite de câble en acier et de caoutchouc comprenant une composition de caoutchouc et un câble en acier, dans lequel

la composition de caoutchouc est une composition de caoutchouc contenant un composant en caoutchouc, une charge, une résine thermodurcissable, un donneur de méthylène, un accélérateur de vulcanisation à base de thiurame et un accélérateur de vulcanisation à base de sulfénamide ; la teneur en composé de cobalt est de 0,01 partie en masse ou moins pour 100 parties en masse du composant en caoutchouc ; et
le câble en acier est un câble en acier soumis à un placage en alliage ternaire,
dans lequel un rapport de masse [(accélérateur de vulcanisation à base de thiurame)/(résine thermodurcissable)] dans la composition de caoutchouc est de 0,02 ou plus et inférieur à 0,12.

2. Composite de câble en acier et de caoutchouc selon la revendication 1, dans lequel la charge dans la composition de caoutchouc contient du noir de carbone, et la teneur en noir de carbone est de 35 parties en masse ou plus et de 45 parties en masse ou moins pour 100 parties en masse du composant en caoutchouc.

3. Composite de câble en acier et de caoutchouc selon la revendication 2, dans lequel le noir de carbone présente une surface spécifique d'adsorption d'azote de 70m$^2$/g ou plus et de 90m$^2$/g ou moins, mesurée conformément à la norme JIS K6217-2:2001, et une quantité d'absorption de phtalate de dibutyle de 50 mL/100 g ou plus et de 110 mL/100 g ou moins, mesurée sur la base de la norme JIS K6217-4:2008.

4. Composite de câble en acier et de caoutchouc selon l'une quelconque des revendications 1 à 3, dans lequel la composition de caoutchouc ne contient pas de composé de cobalt.

5. Composite de câble en acier et de caoutchouc selon l'une quelconque des revendications 1 à 4, dans lequel le placage en alliage ternaire du câble en acier est un système ternaire cuivre-zinc-cobalt.

6. Composite de câble en acier et de caoutchouc selon l'une quelconque des revendications 1 à 5, dans lequel le placage en alliage ternaire du câble en acier est soumis à un traitement de surface.

7. Pneumatique utilisant le composite de câble en acier et de caoutchouc selon l'une quelconque des revendications 1 à 6.

8. Tuyau, bande transporteuse, chenille ou barrage en caoutchouc utilisant le composite de câble en acier et de caoutchouc selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016037547 A
- JP 2014019974 A
- JP 2017007427 A

- WO 2015177838 A1
- JP 2017185938 A

**Non-patent literature cited in the description**

- Rubber Industry Handbook, 436-443